# FASCICULE DE BREVET EUROPEEN

(11) **EP 3 478 558 B1**
(45) Date de publication et mention de la délivrance du brevet: **15.07.2020**
(21) Numéro de dépôt: 17731226.1
(22) Date de dépôt: 24.05.2017
(51) Int. Cl.: B62D 25/08

(54) **STRUCTURE POUR FACE AVANT DE VÉHICULE AUTOMOBILE**
STRUKTUR FÜR FRONTENDE EINES KRAFTFAHRZEUGS
STRUCTURE FOR A MOTOR VEHICLE FRONT END

(30) Priorité: 30.06.2016 FR 1656160
(43) Date de publication de la demande: 08.05.2019
(73) Titulaire: Valeo Systemes Thermiques, 78320 Le Mesnil Saint Denis (FR)
(72) Inventeur: LANARD, Jean-Louis, 78322 Le Mesnil Saint Denis Cedex (FR); DA COSTA PITO, Sergio, 78322 Le Mesnil Saint Denis Cedex (FR)
(74) Mandataire: Tran, Chi-Hai
(86) Numéro de dépôt international: PCT/FR2017/051307
(87) Numéro de publication internationale: WO 2018/002460

(56) Documents cités:
- EP-A1- 1 101 689
- EP-A1- 1 778 536
- EP-A1- 2 233 367
- EP-A1- 2 949 518
- JP-A- 2016 010 983

## Description

L'invention a pour objet une structure pour face avant de véhicule automobile.

Une structure pour face avant de véhicule automobile comprend généralement une traverse supérieure solidaire d'une traverse inférieure par l'intermédiaire de deux jambes disposées verticalement dans le véhicule automobile.

De manière connue, une telle structure pour face avant s'étend dans le véhicule automobile d'un bouclier jusqu'à un tablier du véhicule et permet de solidariser un compartiment moteur, de supporter un groupe motoventilateur tout en constituant une séparation de l'habitacle du véhicule.

Il est connu de prévoir une certaine déformabilité de la structure pour face avant pour résister de manière adaptée à une collision impliquant le véhicule automobile.

La présente invention vise à améliorer la situation en proposant une structure de face avant optimisée, notamment en cas d'un choc frontal subi par le véhicule automobile.

A cet effet, l'invention a pour objet une structure pour face avant de véhicule automobile, comprenant une traverse de capot et au moins un jambage solidaire de la traverse, la traverse s'étendant en longueur selon une direction dite principale, caractérisée en ce que ledit au moins un jambage comprend un premier ensemble de nervures de renforcement sur une partie au moins d'une surface externe dudit au moins un jambage, chaque nervure de renforcement s'étendant dans une direction parallèle à la direction principale de la traverse. Une telle structure pour face avant de véhicule automobile est connue du document EP 2 949 518 A1.

Ainsi, grâce aux nervures de renforcement parallèle à la traverse, la structure selon la présente invention est configurée pour qu'au moins l'un des jambages se déforme axialement dans un mode de compression de la structure (axe longitudinal du véhicule), ce qui assure une meilleure absorption d'énergie en cas d'une collision subie par le véhicule automobile.

L'invention prévoit également que ledit au moins un jambage comprend un deuxième ensemble de nervures de renforcement, lesdites nervures de renforcement du deuxième ensemble s'étendant parallèlement les unes aux autres et étant inclinées par rapport aux nervures de renforcement du premier ensemble sur une partie au moins d'une surface externe dudit au moins un jambage.

Selon une autre caractéristique de l'invention, la partie de surface externe sur laquelle le premier jeu de nervures de renforcement s'étend coïncide au moins partiellement avec la partie de surface externe sur laquelle le deuxième jeu de nervures de renforcement s'étend.

Selon une autre caractéristique de l'invention, ledit au moins un jambage comprend au moins un insert de renforcement.

Selon une autre caractéristique de l'invention, ledit au moins un insert de renforcement présente un profil en forme générale de S.

Selon une autre caractéristique de l'invention, ledit au moins un insert de renforcement présente un profil fermé.

Selon une autre caractéristique de l'invention, ledit au moins un insert de renforcement est constitué à base de métal ou de matériau composite.

Selon une autre caractéristique de l'invention, ledit au moins un jambage délimite un volume interne dont au moins une partie est creuse.

Selon une autre caractéristique de l'invention, la structure comprend un matériau absorbant dans la partie creuse.

D'autres caractéristiques et avantages de l'invention apparaîtront encore à la lecture de la description qui va suivre. Celle-ci est purement illustrative et doit être lue en regard des dessins annexés sur lesquels :
- la figure 1 illustre une vue en perspective d'une structure pour face avant de véhicule automobile selon la présente invention ;
- la figure 2 illustre une vue de côté de la structure de la figure 1 ;
- la figure 3 illustre un détail de côté et d'une section transversale de la structure de la figure 2 ;
- la figure 4 illustre un détail de côté et d'une section transversale de la structure de la figure 2 selon une variante ;
- la figure 5 illustre un détail en perspective de la structure de la figure 2 selon une autre variante ;
- la figure 6 illustre un détail de côté et d'une section transversale d'une structure pour face avant selon un autre mode de réalisation ; et
- les figures 7 et 8 illustrent une évolution au cours du temps d'une force de déformabilité respectivement d'une structure pour face avant de l'art antérieur et de la structure de la figure 1.

### Structure pour face avant de véhicule automobile

L'invention a pour objet une structure 1 pour face avant de véhicule automobile.

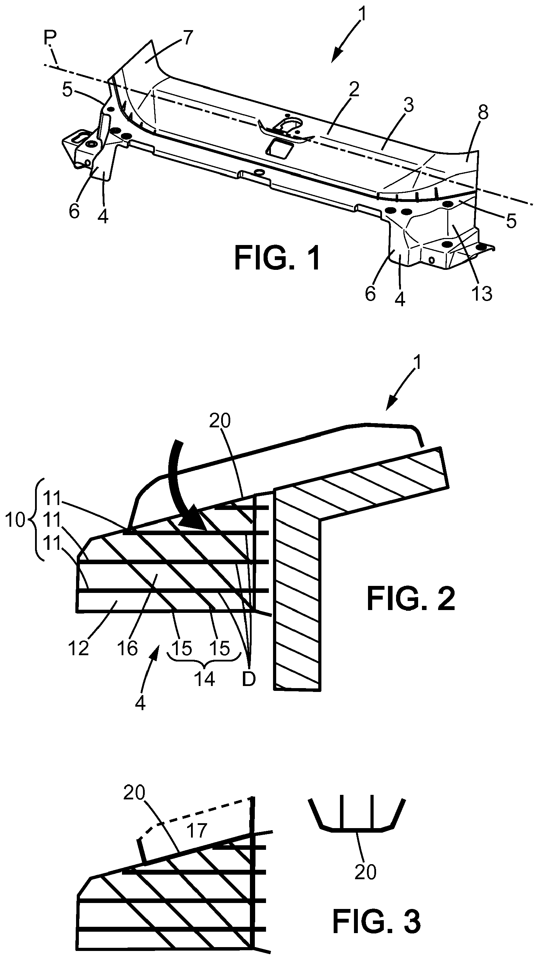

Comme visible sur la figure 1, la structure comprend une traverse référencée 2 sur les figures.

De préférence, il s'agit de la traverse supérieure du véhicule automobile.

La traverse 2 s'étend longitudinalement le long d'une direction, dite principale, référencée P sur la figure 1.

Dans une position installée dans le véhicule automobile, la traverse 2 est disposée horizontalement dans le véhicule automobile, et la direction P est horizontale.

Sur la figure 1, la traverse 2 comprend une assiette formée par une coquille 3.

Bien entendu, l'invention ne se limite pas à cette configuration pour la traverse 2. En particulier, la traverse 2 peut être formée par deux demi-coques, une demi-coque supérieure et une demi-coque inférieure.

Comme visible sur la figure 1, la structure 1 comprend également deux jambages 4 solidaires de la traverse 2.

L'invention va être décrite dans le cas où les deux jambages 4 sont identiques.

Néanmoins, l'invention ne se limite pas à ce cas et il est possible d'envisager des jambages différents l'un de l'autre.

Sur la figure 1, chacun des jambages 4 est solidaire par l'une 5 de ses extrémités 5, 6 à respectivement l'une 7 et l'autre 8 des extrémités 7, 8 de la traverse 2.

L'extrémité 5 est appelée extrémité supérieure.

Les jambages 4 s'étendent parallèlement l'un à l'autre.

Les jambages 4 sont disposés orthogonalement à la direction principale P de la traverse 2.

Les jambages 4 sont continus de matière avec la traverse 2, autrement dit, ces éléments ne forment qu'une seule pièce.

Les jambages 4 permettent de coopérer avec la traverse de sorte à former un cadre de réception d'échangeur(s) thermique(s) du véhicule automobile.

De préférence, chaque jambage 4 présente une longueur de l'ordre de 1,5 fois plus longue que la hauteur de la traverse 2.

En position installée dans le véhicule automobile, les jambages 4 sont érigés sensiblement verticalement.

Comme visible sur les figures, et en particulier à la figure 2, chaque jambage 4 comprend un premier ensemble 10 de nervures de renforcement 11 sur une partie 12 au moins d'une surface externe 13 du jambage.

Chaque nervure de renforcement 11 s'étend de préférence dans une direction D parallèle à la direction principale P de la traverse 2.

En position dans le véhicule automobile, les nervures de renforcement 11 sont disposées horizontalement.

Les nervures de renforcement 11 assurent une augmentation de la résistance de la structure 1 en compression de la structure, permettant une meilleure absorption d'énergie en cas d'une collision subie par le véhicule automobile.

Les nervures de renforcement 11 sont également appelées nervures horizontales 11.

Sur les modes de réalisation illustrés, les nervures de renforcement 11 sont disposées dans une partie inférieure des jambages 4, c'est-à-dire dans une partie ne contenant pas les extrémités 5 de solidarisation des jambages et de la traverse 2.

Toutefois, il est possible d'envisager que les nervures de renforcement s'étendent sur toute la longueur des jambages 4, y compris leur extrémité 5 ou bien que les nervures de renforcement s'étendent uniquement sur une partie supérieure des jambages 4, incluant leur extrémité 5.

Selon l'invention, et comme particulièrement visible sur la figure 2, chaque jambage 4 comprend un deuxième ensemble 14 de nervures de renforcement 15.

Les nervures de renforcement 15 s'étendent parallèlement les unes aux autres.

Les nervures de renforcement 15 sont inclinées par rapport aux nervures horizontales 11 sur une partie 16 au moins de la surface externe 13.

Les nervures de renforcement 15 sont également appelées nervures obliques.

De préférence, la partie 12 de surface externe 13 sur laquelle s'étend le premier ensemble 10 de nervures de renforcement 11 coïncide au moins partiellement avec la partie 16 de surface externe 13 sur laquelle s'étend le deuxième ensemble 14 de nervures obliques 15.

Les nervures obliques assurent le maintien de l'assiette de la traverse 2 en cas de choc frontal, ce qui évite que la traverse ne s'effondre sur les jambages 4.

Comme visible sur les figures, la structure 1 est avantageusement munie d'un insert de renforcement 20.

De préférence, l'insert de renforcement 20 est constitué à base d'une matière plus résistante que la matière formant les jambages 4 et la traverse 2.

Par exemple, l'insert de renforcement 20 est constitué à base d'acier, d'aluminium ou en matériau composite.

Par matériau composite, on entend un ensemble d'au moins deux composants non miscibles, tels que par exemple une combinaison d'un tissu fibré et d'une matrice en résine thermoplastique.

Comme illustré à la figure 3, l'insert de renforcement 20 présente selon une première variante un profil en forme générale de U.

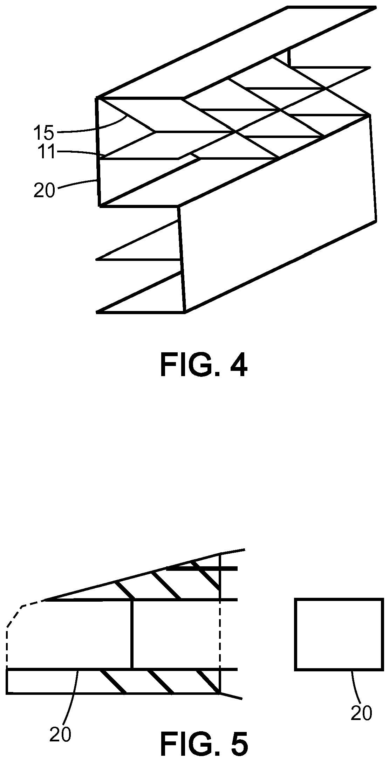

Selon une autre variante, illustrée à la figure 4, l'insert de renforcement 20 présente selon une première variante un profil en forme générale de S.

Selon une autre variante, illustrée à la figure 5, l'insert de renforcement 20 présente selon une première variante un profil fermé.

Avantageusement, chaque jambage 4 délimite un volume interne 17 dont au moins une partie est creuse.

Sur le mode de réalisation illustré aux figures 2 et 3, la partie d'extrémité 5 délimite le volume creux 17.

Le volume creux 17 assure une meilleure déformabilité du jambage 4 en cas de choc du véhicule automobile.

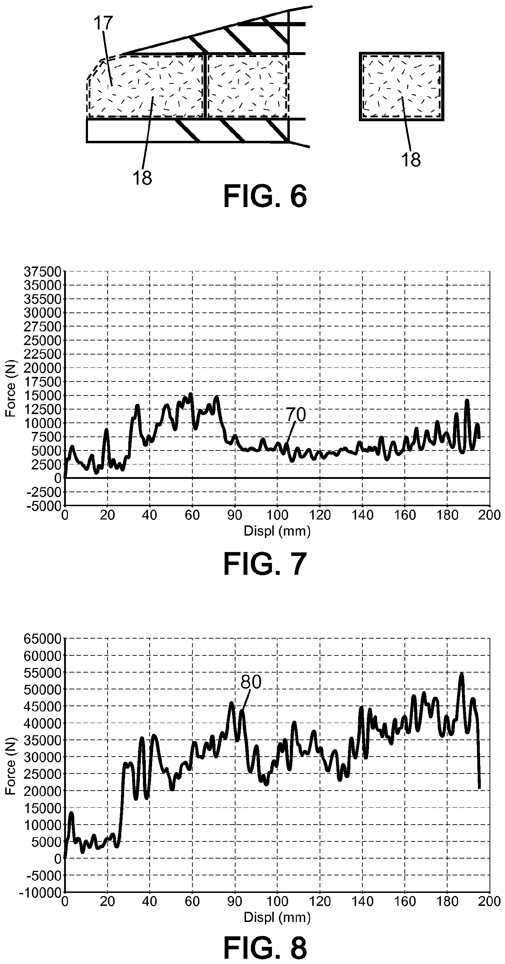

De préférence, comme illustré à la figure 6, le volume creux 17 est rempli au moins partiellement par un matériau absorbant 18, tel que de la mousse.

Le matériau absorbant 18 augmente l'absorption d'énergie par la structure 1 en case de choc du véhicule automobile.

### Procédé de fabrication

La structure 1 est fabriquée par exemple par injection de matière dans un outillage.

De préférence, l'insert 20 est surmoulé, c'est-à-dire qu'il est préformé puis inséré dans l'outillage avant l'injection de matière.

En variante, la formation de l'insert 20 coïncide avec le moment d'injection de matière dans l'outillage.

### Simulation

Un effort appliqué sur une structure pour face avant de l'art antérieur résulte en une courbe 70 (figure 7) et un effort appliqué sur une structure pour face avant selon la présente invention résulte en une courbe 80 (figure 8).

Selon cette courbe 70, la structure présente une force de déformabilité qui augmente jusqu'à 15kN pour un enfoncement de 60 mm, suivie d'une réduction drastique de la force de déformabilité, résultant d'un délitement de la structure.

Au contraire, la structure 1 selon la présente invention présente une force de déformabilité qui augmente jusqu'à 40kN pour un déplacement de l'ordre de 60 mm, avant de stabiliser à 40 kN pour un enfoncement compris entre 60 mm et 200 mm.

Ainsi, comparée à la structure de l'art antérieur, la structure 1 selon la présente invention présente une force de déformabilité supérieure et absorbe l'énergie d'un choc frontal tout en maintenant l'assiette de la traverse, ce qui évite que celle-ci ne s'effondre sur les jambages .

## Revendications

1. Structure pour face avant de véhicule automobile, comprenant une traverse (2) et au moins un jambage (4) solidaire de la traverse (2), la traverse (2) s'étendant longitudinalement selon une direction dite principale (P), **caractérisée en ce que** ledit au moins un jambage (4) comprend un premier ensemble (10) de nervures de renforcement (11) sur une partie (12) au moins d'une surface externe (13) dudit au moins un jambage (4), chaque nervure de renforcement (11) s'étendant dans une direction (D) parallèle à la direction principale (P) de la traverse (2), **caractérisée en ce que** ledit au moins un jambage (4) comprend un deuxième ensemble (14) de nervures de renforcement (15), lesdites nervures de renforcement (15) du deuxième ensemble (14) s'étendant parallèlement les unes aux autres et étant inclinées par rapport aux nervures de renforcement (11) du premier ensemble (10) sur une partie (16) au moins de la surface externe (13) dudit au moins un jambage (4).

2. Structure selon la revendication 1, dans laquelle la partie (12) de surface externe (13) sur laquelle le premier jeu (10) de nervures de renforcement (11) s'étend coïncide au moins partiellement avec la partie (16) de surface externe (13) sur laquelle le deuxième jeu (14) de nervures de renforcement (15) s'étend.

3. Structure selon l'une des revendications précédentes, dans laquelle ledit au moins un jambage (4) comprend au moins un insert de renforcement (20).

4. Structure selon l'une des revendications précédentes, dans laquelle ledit au moins un insert de renforcement (20) présente un profil en forme générale de S.

5. Structure selon la revendication 1, dans laquelle ledit au moins un insert de renforcement (20) présente un profil fermé.

6. Structure selon l'une des revendications précédentes, dans laquelle ledit au moins un insert de renforcement (20) est constitué à base de métal ou de matériau composite.

7. Structure selon l'une des revendications précédentes, dans laquelle ledit au moins un jambage (4) délimite un volume interne dont au moins une partie (17) est creuse.

8. Structure selon la revendication précédente, comprenant un matériau absorbant dans la partie creuse (17).

## Patentansprüche

1. Struktur für ein Frontende eines Kraftfahrzeugs, die eine Traverse (2) und mindestens ein Stützglied (4), das fest an der Traverse (2) angebracht ist, beinhaltet, wobei sich die Traverse (2) längs gemäß einer sogenannten Hauptrichtung (P) erstreckt, **dadurch gekennzeichnet, dass** das mindestens eine Stützglied (4) eine erste Gesamtheit (10) von Verstärkungsrippen (11) auf einem Teil (12) mindestens einer Außenfläche (13) des mindestens einen Stützglieds (4) beinhaltet, wobei sich jede Verstärkungsrippe (11) in einer zur der Hauptrichtung (P) der Traverse (2) parallelen Richtung (D) erstreckt, **dadurch gekennzeichnet, dass** das mindestens eine Stützglied (4) eine zweite Gesamtheit (14) von Verstärkungsrippen (15) beinhaltet, wobei sich die Verstärkungsrippen (15) der zweiten Gesamtheit (14) parallel zueinander erstrecken und in Bezug auf die Verstärkungsrippen (11) der ersten Gesamtheit (10) auf einem Teil (16) mindestens der Außenfläche (13) des mindestens einen Stützglieds (4) geneigt sind.

2. Struktur nach Anspruch 1, wobei der Teil (12) der Außenfläche (13), auf dem sich der erste Satz (10) Verstärkungsrippen (11) erstreckt, mindestens teilweise mit dem Teil (16) der Außenfläche (13), auf dem sich der zweite Satz (14) Verstärkungsrippen (15) erstreckt, zusammenfällt.

3. Struktur nach einem der vorhergehenden Ansprüche, wobei das mindestens eine Stützglied (4) mindestens einen Verstärkungseinsatz (20) beinhaltet.

4. Struktur nach einem der vorhergehenden Ansprüche, wobei der mindestens eine Verstärkungseinsatz (20) ein im Allgemeinen S-förmiges Profil aufweist.

5. Struktur nach Anspruch 1, wobei der mindestens eine Verstärkungseinsatz (20) ein geschlossenes Profil aufweist.

6. Struktur nach einem der vorhergehenden Ansprüche, wobei der mindestens eine Verstärkungseinsatz (20) auf der Basis von Metall oder Verbundmaterial gebildet ist.

7. Struktur nach einem der vorhergehenden Ansprüche, wobei das mindestens eine Stützglied (4) ein Innenvolumen abgrenzt, von dem mindestens ein Teil (17) hohl ist.

8. Struktur nach dem vorhergehenden Anspruch, die in dem hohlen Teil (17) ein absorbierendes Material beinhaltet.

## Claims

1. Structure for a motor vehicle front end, comprising a cross member (2) and at least one column (4) rigidly connected to the cross member (2), the cross member (2) extending longitudinally in a so-called main direction (P), **characterized in that** said at least one column (4) comprises a first set (10) of reinforcing ribs (11) on a portion (12) of at least an outer surface (13) of said at least one column (4), each reinforcing rib (11) extending in a direction (D) parallel to the main direction (P) of the cross member (2), **characterized in that** said at least one column (4) comprises a second set (14) of reinforcing ribs (15), said reinforcing ribs (15) of the second set (14) extending parallel to each other and being inclined relative to the reinforcing ribs (11) of the first set (10) on at least one portion (16) of the outer surface (13) of said at least one column.

2. Structure according to Claim 1, wherein the portion (12) of the outer surface (13), on which the first set (10) of reinforcing ribs (11) extends, coincides at least partially with the portion (16) of the outer surface (13) on which the second set (14) of reinforcing ribs (15) extends.

3. Structure according to one of the preceding claims, wherein said at least one column (4) comprises at least one reinforcing insert (20).

4. Structure according to one of the preceding claims, wherein said at least one reinforcing insert (20) has a generally S-shaped profile.

5. Structure according to Claim 1, wherein said at least one reinforcing insert (20) has a closed profile.

6. Structure according to one of the preceding claims, wherein said at least one reinforcing insert (20) is made from a metal or composite material.

7. Structure according to one of the preceding claims, wherein said at least one column (4) defines an inner volume at least one portion (17) of which is hollow.

8. Structure according to the preceding claim, comprising an absorbent material in the hollow portion (17) .
